# EUROPEAN PATENT SPECIFICATION

(11) **EP 2 572 901 B1**
(45) Date of publication and mention of the grant of the patent: **09.08.2017**
(21) Application number: 11783512.4
(22) Date of filing: 16.05.2011
(51) Int. Cl.: B60B 35/18, B60B 35/16, F16C 19/18, F16C 19/38, F16C 33/62, F16C 33/64, F16C 33/76, F16C 33/78, F16C 35/067, F16J 15/06, F16J 15/10, B60B 27/00

(54) **BEARING DEVICE FOR WHEEL**
RADLAGERVORRICHTUNG
DISPOSITIF DE PALIER POUR ROUE

(30) Priority: 17.05.2010 JP 2010112824
(43) Date of publication of application: 27.03.2013
(73) Proprietor: NTN Corporation, Osaka-shi, Osaka 550-0003 (JP)
(72) Inventor: YAMAMOTO, Kazunari, Iwata-shi Shizuoka 438-8510 (JP); SHIGEOKA, Kazuhisa, Iwata-shi Shizuoka 438-8510 (JP)
(74) Representative: Cohausz & Florack
(86) International application number: PCT/JP2011/061234
(87) International publication number: WO 2011/145578

(56) References cited:
- EP-A1- 1 491 899
- EP-A1- 1 547 814
- EP-A1- 1 598 216
- WO-A1-2010/021118
- JP-A- 2001 150 909
- JP-A- 2003 148 494
- JP-A- 2005 016 551
- JP-A- 2005 042 894
- JP-A- 2005 054 994
- JP-A- 2005 054 994
- JP-A- 2005 104 260
- JP-A- 2005 195 168
- JP-A- 2005 297 744
- JP-A- 2005 321 375
- JP-A- 2007 326 402
- JP-A- 2008 528 878
- JP-U- H0 679 606
- JP-U- H0 679 606
- JP-Y2- 2 597 023
- US-A- 4 692 040
- US-A1- 2007 217 728
- US-A1- 2007 286 536

## Description

### Technical Field

The present invention relates to a wheel bearing apparatus for rotatably supporting a wheel of a vehicle such as an automobile relative to a suspension apparatus of the vehicle, and more particularly to a wheel bearing apparatus of a semi-floating type in which a driving wheel is supported by a double row rolling bearing.

### Background Art

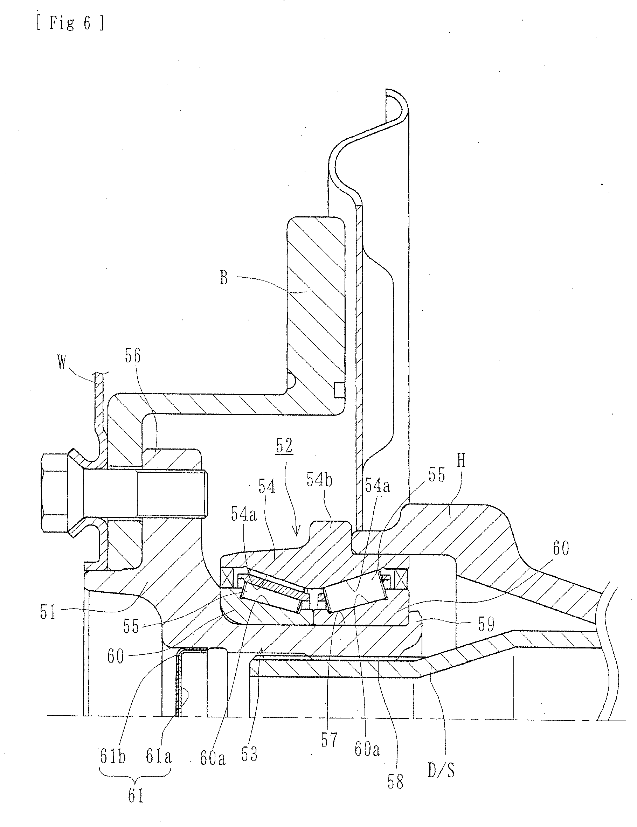

In a vehicle such as a truck having a body of a frame structure, an axle structure of a full-floating type driving wheel has been widely adopted. In recent driving wheel supporting structures, a double row rolling bearing unit structure has been widely adopted so as to improve the readiness of assembly, reduction of weight and size. One example of such a semi-floating type wheel bearing apparatus of the prior art is shown in Fig. 6.

The wheel bearing apparatus is aimed at reducing the weight and size and at preventing penetration of rain water or dust, and leakage of a differential gear oil and thereby a wheel hub 51 and a double row rolling bearing 52 are configured as a unit, and connected to a driving shaft D/S. The double row rolling bearing 52 includes an inner member 53, an outer member 54 and double row conical rollers 55, 55 rollably accommodated between both members 53, 54. The wheel hub 51 integrally has a wheel mounting flange 56 for attaching a wheel W and a brake rotor B at one end of the outer circumference. A cylindrical portion 57 extending from the wheel mounting flange 56 in the axial direction is formed at the wheel hub 51. Further, serrations 58 are formed so that the driving shaft D/S is fitted in the inner circumference thereof for transmitting the torque.

Meanwhile, double row rolling bearing 52 has an outer member 54 formed with, in its inner circumference, double row tapered outer raceway surfaces 54a, 54a, and in its outer circumference, a body mounting flange 54b which is fixed to an axle housing H; a pair of inner rings 60, 60, which is inserted in the outer member 54 and in which a tapered inner raceway surface 60a is formed opposite to the double row outer raceway surfaces 54a, 54a in its outer circumference; and double row conical rollers 55, 55 which are rollably accommodated between both raceway surfaces 54a, 60a. The pair of inner rings 60, 60 are press-fitted in the cylindrical portion 57 formed in the outer circumference of the wheel hub 51. The inner rings 60 are prevented from being removed in the axial direction with respect to the wheel hub 51 by a caulked portion 59 which is formed by plastic deforming of an end portion of the cylindrical portion 57 in the radial direction. Thus, end surfaces of the forward of the pair of inner rings 60, 60 are set in an abutting state and configure a so-called back-abutted type double row conical roller bearing.

A cap 61 is press-fitted in an opening of the wheel hub 51. The cap 61 is configured of a metal core 61a made of a steel plate which is press-formed as having a substantially "C"-shaped cross-section of an austenitic-stainless steel sheet (JIS SUS 304 etc.) or preserved cold rolled steel sheet (JIS SPCC etc.), and an elastic member 61b of a rubber bonded via vulcanization to at least the fitting portion of the metal core 61a. The elastic member 61b is elastically deformed into the fitting surface to fluid-tightly seal the inside thereof. Accordingly, it is possible to completely prevent leakage of the differential gear oil to the outside and penetration of rain water or dust from the outside into the driving shaft and thus to mix into the differential gear oil. In addition, the cap 61 almost uninfluenced by the elastic deformation of the wheel hub 51 even though the wheel hub 51 repeatedly receives a moment load and is elastic deformed when driving the vehicle (for example, see Patent Literature 1).

### Citation List

### Patent Document

Patent Document 1: Japanese Laid-open Patent Publication No. 2005-297944.

In the prior art, there are known some wheel bearing apparatus that provide a sealing for a gap between the axle housing H and double row rolling bearing 52. For example EP-A-1 491 899 and JP-A-2005 054994 describe a known wheel bearing apparatus according to the preamble of claim 1.

Furthermore, from US-A-4 692 040, a bearing with a seal ring mounted on the outer circumference of the outer member of the bearing is known and from JP-A-2001 150909, an outer member of a bearing with a pilot portion comprising a cylindrical and a tapered portion is known.

### Summary of Invention

### Technical Problem

However, in the wheel bearing apparatus of the prior art, there are concerns that rain water or dust from the outside may penetrate through the gap between the axle housing H and double row rolling bearing 52, and the differential gear oil may leak outside. In this case, the rain water dust is mixed with the differential gear oil and the leaked differential gear oil contaminates the surroundings and furthermore, it is possible for malfunctions of the brake to occur due to scattering to the brake rotor B.

It is, therefore, an object of the present invention to provide a wheel bearing apparatus which can prevent penetration of rain water or dust and leakage of differential gear oil so that the sealing effect is increased and reliability is ensured over the long term.

### Solution to Problem

For achieving the object of the present invention, there is provided according to the present invention of claim 1, a wheel bearing apparatus includes: an axle housing into which a driving shaft connecting to a differential gear is inserted and which is supported on the lower surface of a vehicle body; a wheel hub which is joined to the driving shaft and integrally has a wheel mounting flange for attaching a wheel and in which a cylindrical portion extending in an outer circumference in an axial direction; a wheel bearing which is fitted between the cylindrical portion of the wheel hub and an opening of the axle housing and rotatably supports the wheel; an outer member in which the wheel bearing integrally has a body mounting flange to be attached to the axle housing in the outer circumference and a pilot portion fitted into the axle housing at an end portion of an inner side, and double row outer raceway surfaces are integrally formed in the inner circumference; an inner member which is press-fitted in the cylindrical portion of the wheel hub and configured of at least one inner ring in which inner raceway surfaces are formed opposite to the double row outer raceway surfaces; double row rolling bodies which are rollably accommodated between the inner member and both raceway surfaces of the outer member via a cage; and a seal which is mounted in an opening of an annular space formed between the outer member and the inner member, and wherein an annular groove is formed at the pilot portion of the outer member, a seal ring formed of a synthetic rubber is mounted in the annular groove and elastically contacts the axle housing and then a slight gap of a fitting portion between the outer member and the axle housing is blocked off characterized in that the pilot portion of the outer member is configured of a cylindrical portion extending from the body mounting flange in the axial direction and a tapered portion gradually decreasing in its diameter from the cylindrical portion to the end surface of the inner side, that the fitting portion of the axle housing is formed corresponding to the shape of the pilot portion of the outer member, that the annular groove is formed at the tapered portion of the pilot portion and that an inner diameter of the seal ring unit is set to be smaller than a groove bottom diameter of the annular groove.

As described above, in the wheel bearing apparatus including the axle housing which is inserted in the driving shaft connecting the differential gear and is supported on the lower surface of the vehicle body; the wheel hub integrally having the wheel mounting flange; and wheel bearing which is configured of double row rolling bearing fitted between the wheel hub and the opening of the axle housing, the annular groove is formed at the pilot portion of the outer member, the seal ring, which is formed of the synthetic rubber, is mounted in the annular groove and elastically contacts the axle housing, and a slight gap of the fitting portion between the outer member and the axle housing is blocked off so that the wheel bearing apparatus can be provided which can prevent penetration of rain water or dust and leakage of differential gear oil so that sealing effect is increased and reliability is ensured over the long term.

Moreover, the assembly of the bearing portion to the axle housing is easily performed and the assembly work can be simplified and readiness of assembly of the bearing portion to the axle housing is improved. Also, when the bearing portion is assembled to the axle housing, it is possible to prevent the seal ring being bitten by the axle housing due to the seal ring bends.

In addition, it is preferable as defined in claim 2 that an outer diameter of the seal ring after mounting be set to be smaller than the inner diameter of the cylindrical portion of the axle housing. Accordingly, when the bearing portion is assembled to the axle housing, it is possible to reliably prevent the seal ring being bitten into by the axle housing.

It is preferable as defined in claim 3 that a predetermined hardened layer be formed by a high frequency induction quenching at the double row outer raceway surfaces of the outer member, an effective hardened layer depth of the hardened layer be set to be in a range of 2 to 4.5 mm, and the shortest distance between the annular groove and the outer raceway surface be set to be 4.5 mm or more. Accordingly, the annular groove is not subject to thermal influence due to the quenching and its heat-treatment deformation can be prevented, and simultaneously a decrease in the strength due to annealing or the like can be prevented and then the reliability can be improved.

It is preferable as defined in claim 4 that the annular groove be formed with a substantially rectangular cross-section and a corner R in a near side of the outer raceway surface in corners R of the annular groove be set to be larger than a corner R in a far side thereof. Accordingly, since the distance from the outer raceway surface is larger than that of the same corner R substantially, it is advantageous with respect to the heat treatment deformation and when the bending load is repeatedly applied, the strength is increased and the durability can be improved.

It is preferable as defined in claim 5 that the annular groove be formed in substantially semi-circular cross-section and the groove bottom portion have a single radius of curvature. Accordingly, the annular groove is subject to almost not thermal influence due to the quenching and decrease in the strength due to cut-out effect can be suppressed.

It is preferable as defined in claim 6 that a compression set in the rubber material values of the seal ring be 40 % or less in 120°C x 70 hours and TR10 value (elongation rate 50 %) is -20°C or less. Accordingly, the distortion recovery characteristic is satisfactory even in a low temperature region and desired sealing effect can be maintained.

It is preferable as defined in claim 7 that a color of the seal ring be set as a warm color. Accordingly, when assembling, forgetting to mount or overlooking confirmation of the mounting of the seal ring can be prevented and the assembly work can be simplified.

It is preferable as defined in claim 8 that the same grease as enclosed inside the bearing be coated on the seal ring beforehand and the seal ring be mounted in a state where the grease is attached to its surface. Accordingly, mounting ability of the seal ring can be improved and the bearing portion can be smoothly fitted in the axle housing without bending even though the seal ring contacts the axle housing when assembling.

It is preferable as defined in claim 9 that the seal ring be selected from hydrogenation acrylonitrile-butadiene rubber, ethylene propylene rubber, polyacrylic rubber, fluorine rubber or silicon rubber. Accordingly, the seal ring is excellent in heat resistance and in chemical resistance and durability thereof can be improved. Advantageous Effects of Invention

The wheel bearing apparatus of the present invention includes: an axle housing into which a driving shaft connecting to a differential gear is inserted and which is supported on the lower surface of a vehicle body; a wheel hub which is joined to the driving shaft and integrally has a wheel mounting flange for attaching a wheel and in which a cylindrical portion extending in an outer circumference in an axial direction; a wheel bearing which is fitted between the cylindrical portion of the wheel hub and an opening of the axle housing and rotatably supports the wheel; an outer member in which the wheel bearing integrally has a body mounting flange to be attached to the axle housing in the outer circumference and a pilot portion fitted into the axle housing at an end portion of an inner side, and double row outer raceway surfaces are integrally formed in the inner circumference; an inner member which is press-fitted in the cylindrical portion of the wheel hub and configured of at least one inner ring in which inner raceway surfaces are formed opposite to the double row outer raceway surfaces; double row rolling bodies which are rollably accommodated between the inner member and both raceway surfaces of the outer member via a cage; and a seal which is mounted in an opening of an annular space formed between the outer member and the inner member, and wherein an annular groove is formed at the pilot portion of the outer member, a seal ring formed of a synthetic rubber is mounted in the annular groove and elastically contacts the axle housing and then a slight gap of a fitting portion between the outer member and the axle housing is blocked off characterized in that the pilot portion of the outer member is configured of a cylindrical portion extending from the body mounting flange in the axial direction and a tapered portion gradually decreasing in its diameter from the cylindrical portion to the end surface of the inner side, that the fitting portion of the axle housing is formed corresponding to the shape of the pilot portion of the outer member, that the annular groove is formed at the tapered portion of the pilot portion and that an inner diameter of the seal ring unit is set to be smaller than a groove bottom diameter of the annular groove. The wheel bearing apparatus can be provided which can prevent penetration of rain water or dust and leakage of differential gear oil so that sealing effect is increased and reliability is ensured over the long term.

### Brief Description of Drawings

Fig. 1 is a longitudinal-section view of around an underbody of a vehicle illustrating an embodiment of a wheel bearing apparatus.
Fig. 2 is a longitudinal-section view illustrating the wheel bearing apparatus in Fig. 1.
Fig. 3(a) is an enlarged view of a main portion of Fig. 2 and Fig. 3(b) is a partially enlarged view of Fig. 3(a).
Fig. 4(a) is an enlarged view of the present invention showing a main portion illustrating a modification example of Fig. 3(a) and Fig. 4(b) is a cross-sectional view illustrating a seal ring unit of Fig. 4(a).
Fig. 5(a) is a partially enlarged view of Fig. 4 and Fig. 5(b) is a partially enlarged view illustrating a modification example of Fig. 5(a).
Fig. 6 is a longitudinal-section view illustrating the wheel bearing apparatus of the prior art.

### Description of Embodiments

The semi-floating type wheel bearing apparatus includes: an axle housing into which a driving shaft connecting to a differential gear is inserted and which is supported on the lower surface of a vehicle body; a wheel hub which is joined to the driving shaft via serration and integrally has a wheel mounting flange for attaching a wheel and in which a cylindrical portion extending in an outer circumference in an axial direction is formed; a wheel bearing which is fitted between the cylindrical portion of the wheel hub and an opening of the axle housing and rotatably supports the wheel; an outer member in which the wheel bearing integrally has a body mounting flange to be attached to the axle housing in the outer circumference and a pilot portion fitted into the axle housing at an end portion of an inboard side, and double row outer raceway surfaces are integrally formed in the inner circumference; a pair of inner rings in which an inner raceway surface is formed opposite to the double row outer raceway surface at the outer circumference; double row rolling bodies which are rollably accommodated between the pair of inner rings and both raceway surfaces of the outer member via a cage; and a seal which is mounted in an opening of an annular space formed between the outer member and the pair of inner rings, and wherein the inner rings of the wheel bearing is fitted in the cylindrical portion of the wheel hub, the inner rings are fixed to the wheel hub in the axial direction by a caulked portion formed by plastically deforming the end of the cylindrical portion radially outward, the pilot portion of the outer member is configured of a cylindrical portion extending from the body mounting flange and a tapered portion gradually decreasing in the diameter from the cylindrical portion to the end surface of the inboard side, the fitting portion of the axle housing is formed corresponding to the shape of the pilot portion of the outer member, the annular groove having a substantially rectangular cross-section is formed at the tapered portion of the pilot portion a seal ring formed of a synthetic rubber is mounted in the annular groove, the outer diameter of the seal ring after mounting is set to be smaller than the inner diameter of the cylindrical portion of the axle housing and elastically contacts the axle housing and then a slight gap of a fitting portion between the outer member and the axle housing is blocked off.

### Example

Hereinafter, embodiment of the present invention is described in detail based on the drawings.

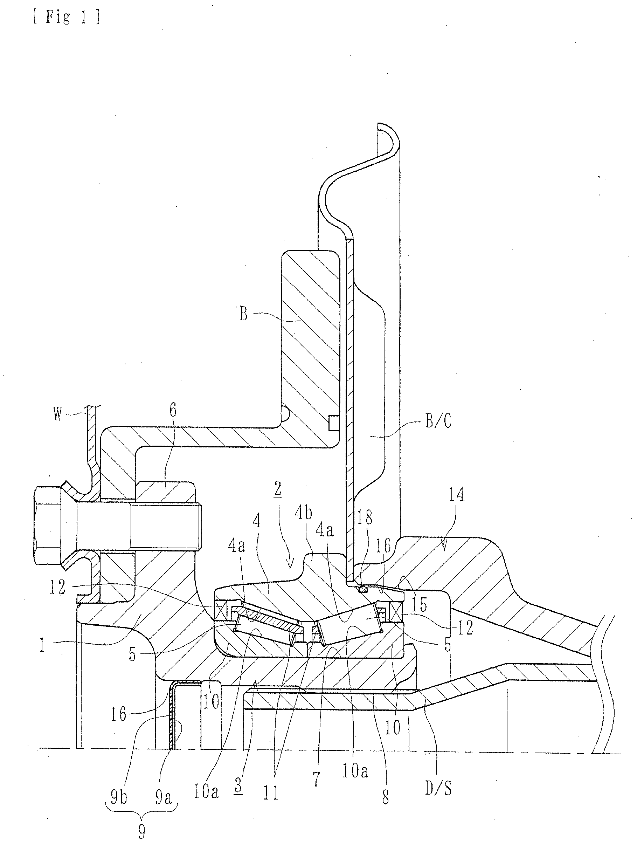

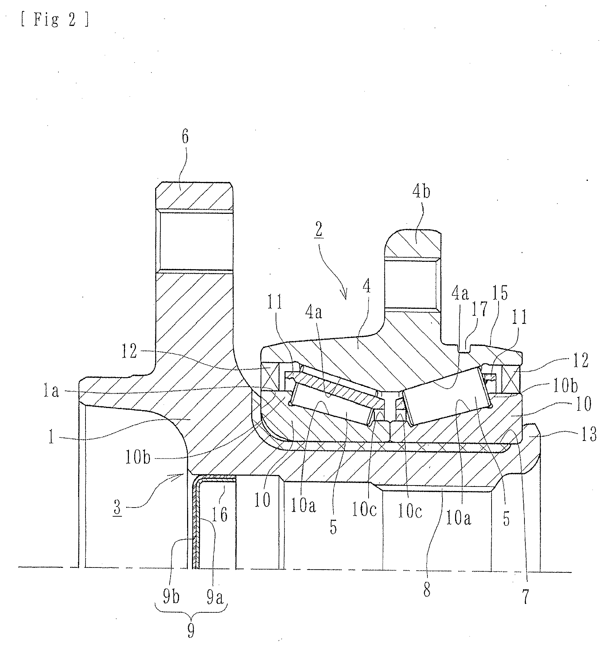

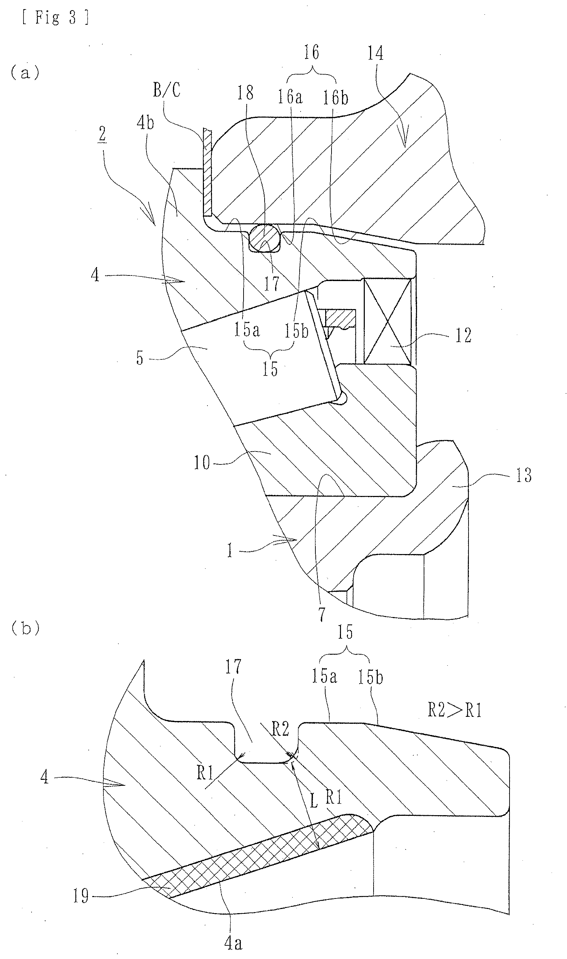

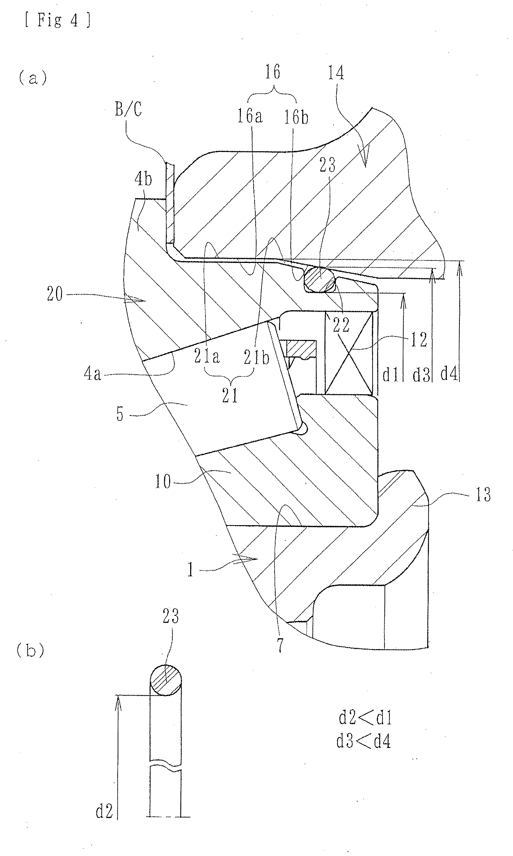

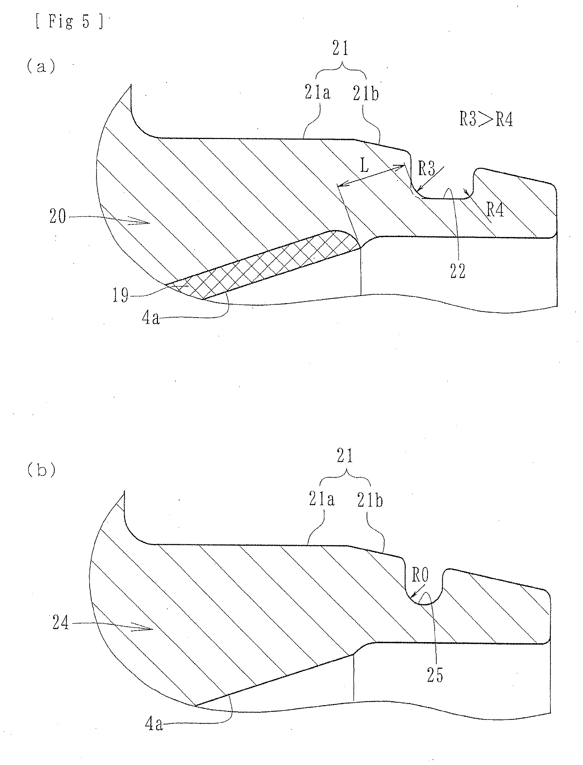

Fig. 1 is a longitudinal-section view of around an underbody of an embodiment of a wheel bearing apparatus, Fig. 2 is a longitudinal-section view illustrating the wheel bearing apparatus in Fig. 1, Fig. 3(a) is an enlarged view of a main portion of Fig. 2, Fig. 3(b) is a partially enlarged view of Fig. 3(a), Fig. 4(a) is an enlarged view of the present invention showing a main portion illustrating a modification example of Fig. 3(a), Fig. 4(b) is a cross-sectional view illustrating a seal ring unit of Fig. 4(a), Fig. 5(a) is a partially enlarged view of Fig. 4, and Fig. 5(b) is a partially enlarged view illustrating a modification example of Fig. 5(a). In the description below, a side of a bearing positioned to the outside of a vehicle when it is mounted on a vehicle is referred to as the "outboard" side (the left side in Fig. 1), and a side of the bearing positioned to the center of the vehicle is referred to as "inboard" side (the right side in Fig. 1).

The semi-floating type wheel bearing apparatus is configured of a wheel hub 1 and double row rolling bearing 2 as a unit and is connected to the driving shaft D/S. The double row rolling bearing 2 includes an inner member 3, an outer member 4 and double row rolling bodies (conical rollers) 5, 5 which are rollably accommodated between both members 3, 4. Here, the inner member 3 means the wheel hub 1, and a pair of inner rings 10, 10 press-fitted in the wheel hub 1.

The wheel hub 1 integrally has a wheel mounting flange 6 for attaching the wheel W and a brake rotor B at an end portion of the outboard side. In addition, a cylindrical portion 7 extending from the wheel mounting flange 6 in its outer circumference in the axial direction and a serrations (or a spline) 8 in its inner circumference thereof are formed. Thus, the driving shaft D/S is inserted via the serrations 8. The wheel hub 1 and the driving shaft D/S are joined with freely transmitting the torque and removably.

As shown in Fig. 2, the double row rolling bearing 2 includes the outer member 4 formed with double row tapered outer raceway surfaces 4a, 4a on its inner circumference and with a vehicle body mounting flange 4b to be secured in an axle housing 14 on its outer circumference; a pair of inner rings 10, 10 inserted in the outer member 4 and formed with tapered inner raceway surfaces 10a on its outer circumference opposite to the double row outer raceway surfaces 4a, 4a; double row rolling bodies 5, 5 accommodated between both raceway surfaces 4a, 10a; and a cage 11 for rollably holding the double row rolling bodies 5, 5.

A pair of inner rings 10, 10 is formed with, at a larger diameter side of the inner raceway surface 10a, a large flange 10b for guiding the rolling body 5, and a small flange 10c for preventing from being removed of the rolling body 5 at the small diameter side. Thus the pair of inner rings 10, 10 are arranged so that their forward ends abut each other and thus form a so-called back-abutted type double row conical roller bearing.

Seals 12, 12 are mounted at the openings of an annular space formed between the outer member 4 and inner ring 10. The seals 12, 12 prevent leakage of lubricating grease sealed within the bearing to the outside and penetration of rain water or dust from the external environments into the bearing. The inboard side seal 12 further prevents penetration or penetration of differential gear oil into the inside of the bearing via the serration 8 of the wheel hub 1.

The pair of inner rings 10, 10 are press-fitted onto the cylindrical portion 7 of the wheel hub 1 via a predetermined interference and the inner rings 10, 10 are fixed to the wheel hub 1 in the axial direction by a caulked portion 13 formed by plastically deforming the end of the cylindrical portion 7 radially outward, in a state where the preload of the bearing is provided. Since this embodiment adopts the self-retaining structure of the second generation, it is not required to control the amount of preload as in a conventional manner by tightly fastening a nut or the like against the inner ring. Accordingly, it is possible to substantially reduce the number of parts and thus to improve the readiness of assembly and maintain the amount of preload over the long term as well as to reduce its manufacturing cost, weight and size.

The wheel hub 1 is made of medium and high carbon steel such as S53C including carbon of 0.40 to 0.80% by weight and hardened by high frequency induction quenching so that the double row rolling bearing 2 has the surface hardness of 50 to 64 HRC (the hardened portion is shown in drawings by cross-hatched lines) from the shoulder portion 1a through the cylindrical portion 7. The caulked portion 13 remains as an unhardened portion having its surface hardness of 25 HRC or less. This improves the durability and workability of the caulked portion 13 during plastic deformation, and also prevents generation of cracks therein and then the reliability of the quality thereof is improved.

Similar to the wheel hub 1, the outer member 4 is also made of medium and high carbon steel such as S53C including carbon of 0.40 to 0.80% by weight and at least the double row outer raceway surfaces 4a, 4a are hardened by high frequency induction quenching so that their surface hardness is in a range of 58 to 64 HRC. On the other hand, the inner rings 10 and the rolling body 5 are made of a high carbon chrome bearing steel such as SUJ2 and hardened to its core by dipping quenching to have a surface hardness of HRC 60 to 64. Although it is herein illustrated as a double row conical roller bearing using tapered roller as rolling bodies 5, 5, a double row angular ball bearing using balls may be also used. In addition, although it is herein illustrated as the wheel bearing apparatus configured of the second generation structure wherein the pair of inner rings 10, 10 is press-fitted and fixed to the cylindrical portion 7 of the wheel hub 1, the present invention is not limited to the description and may be the wheel bearing apparatus configured of the third generation structure wherein the inner raceway surface is formed directly on the outer circumference of the wheel hub even though not illustrated.

In this embodiment, a cap 9 is press-fitted into an opening of the wheel hub 1 at its outboard side. The cap 9 is configured of a metal core 9a made of a steel plate which is press-formed as having a substantially "C"-shaped cross-section of an austenitic-stainless steel sheet (JIS SUS 304 etc.) or preserved cold rolled steel sheet (JIS SPCC etc.), and an elastic member 9b of a synthetic rubber bonded via vulcanization to at least the fitting portion of the metal core 9a. The elastic member 9b is elastically deformed in the fitting surface to fluid-tightly seal the inside thereof. Accordingly, it is possible to prevent leakage of the differential gear oil to outside and penetration of rain water or dust from the outside into the driving shaft and thus to mix into the differential gear oil.

Here, as shown in the enlarged view in Fig. 3(a), a pilot portion 15 of the outer member 4 is configured of a cylindrical portion 15a extending from the body mounting flange 4b in the axial direction and a tapered portion 15b which gradually decreases in diameter from the cylindrical portion 15a to an end surface of the inboard side. In addition, the fitting portion 16 of the axle housing 14 is also configured of a cylindrical portion 16a along the cylindrical portion 15a and a tapered portion 16b gradually decreasing in its diameter from the cylindrical portion 16a to the inboard side corresponding to the shape of the pilot portion 15 of the outer member 4. The double row rolling bearing 2 is fitted in the axle housing 14, in a state where the brake cover B/C is clamped. Accordingly, the assembly of the bearing portion to the axle housing 14 is easily performed and the assembly work is simplified, and the airtight of the fitting portion of the bearing portion with the axle housing increases.

Thus, in the embodiment, an annular groove 17 having a rectangular cross-section is formed at the cylindrical portion 15a of the pilot portion 15 and a seal ring 18 having a circular cross-section is mounted in the annular groove 17. The seal ring 18 is formed of a synthetic rubber such as NBR, elastically contacts the axle housing 14 and cuts off a slight gap of the fitting portion between the outer member 4 and the axle housing 14. Accordingly, the penetration of rainwater or dust and leakage of the differential gear oil are prevented so that the wheel bearing apparatus may be provided in which the sealing effect is increased and the reliability is ensured over the long term. The material of the seal ring 18 includes for example, HNBR (hydrogenation acrylonitrile-butadiene rubber), EPDM (ethylene propylene rubber), ACM (polyacrylic rubber) or FKM (fluorine rubber) or silicon rubber which are excellent in heat resistance besides NBR. Specifically, ACM, FKM, EPDM and silicon rubber having excellent heat resistance and chemical resistance are preferable for the use to contact this type of differential gear oil.

The seal ring 18 is used in which the compression set in the rubber material values is 40 % or less in 120°C x 70 hours and TR10 value (elongation rate 50 %) is -20°C or less. Accordingly, the distortion recovery characteristic is satisfactory even in a low temperature region and desired sealing effect can be maintained. In addition, the TR10 value means the temperature when the distortion that is given beforehand is recovered by 10 % and near the value is empirically used as a low temperature limit value of the rubber material.

In addition, the inner diameter of the seal ring 18 before mounting is set to be smaller than the diameter of the bottom of the annular groove 17. Accordingly, the interference is present when the seal ring 18 is mounted. It is possible to prevent the seal ring 18 bending and then being bitten by the axle housing 14, when the bearing portion is assembled in the axle housing 14. As an inverse configuration, it may be considered that the annular groove is formed at the axle housing and the seal ring is mounted in the annular groove beforehand. However, in this case, it is not preferable because there is concern that when the bearing portion is assembled at the axle housing, the seal ring may contact the outer member and may be removed from the annular groove and then be bitten.

Further, in the embodiment, as shown in 3(b), a predetermined hardened layer 19 is formed at the double row outer raceway surface 4a of the outer member 4 by high frequency induction quenching (the hardened portion is shown in drawings by cross-hatched lines) and an effective hardened layer depth of the hardened layer 19 is set to be in a range of 2 to 4.5 mm. Thus, the annular groove 17 is arranged so that the shortest distance L between the annular groove 17 where the seal ring 18 is mounted and the outer raceway surface 4a is 4.5 mm or more. Accordingly, the annular groove 17 is not subject to thermal influence due to the quenching and its heat-treatment deformation can be prevented, and then decrease in the strength due to annealing or the like can be prevented and then the reliability can be improved.

Further, a corner R (R2) of the inboard side that is the near side of the outer raceway surface 4a of the corners R in the annular groove 17 is set to be larger (R2>R1) than a corner R (R1) of the outboard side. Accordingly, since the distance from the outer raceway surface 4a is substantially larger than that of the same corner R (R1=R2), it is advantageous against the heat-treatment deformation and the strength can increase when a bending load is repeatedly applied, and then the durability can be improved.

In addition, the color of the seal ring 18 is set as a warm color such as red, yellow, orange, the yellow green. Accordingly, when assembling, forgetting to mount or overlooking confirmation of the mounting of the seal ring 18 can be prevented and the assembly work can be simplified.

Further, grease is coated on the seal ring 18 beforehand which is the same grease as enclosed inside the bearing and the seal ring 18 is mounted in a state where the grease is attached to its surface. Accordingly, mounting ability of the seal ring 18 can be improved and the bearing portion can be smoothly fitted in the axle housing 14 without bending even though the seal ring 18 contacts the axle housing 14 when assembling.

A modification example is illustrated in Fig. 4(a). A pilot portion 21 of an outer member 20 is configured of a cylindrical portion 21a extending from the body mounting flange 4b in the axial direction and a tapered portion 21b gradually decreasing in its diameter from the cylindrical portion 21a to the end surface of the inboard side. The outer member 20 is fitted in the axle housing 14 in a state where the brake cover B/C is clamped. Thus, in the embodiment, an annular groove 22 having a rectangular cross-section is formed at the tapered portion 21b of the pilot portion 21 and a seal ring 23 having a circular cross-section is mounted in the annular groove 22.

The seal ring 23 is formed of ACM, and is molded having a substantially circular cross-section and is elastically contacts the tapered portion 16b of the axle housing 14. Thus, as shown in Fig. 4(b), the inner diameter d2 of the seal ring 23 unit is set to be smaller (d2<d1) than the groove bottom diameter d1 and the outer diameter d3 of the seal ring 23 after mounting is set to be smaller (d3<d4) than the inner diameter d4 of the cylindrical portion 16a of the axle housing 14. Accordingly, when the bearing portion is assembled in the axle housing 14, it is possible to reliably prevent the seal ring 23 being bitten by the axle housing 14.

Further, in the embodiment, as shown in 5(a), a predetermined hardened layer 19 is formed at the double row outer raceway surface 4a of the outer member 20 by high frequency induction quenching (the hardened portion is shown in drawings by cross-hatched lines) and an effective hardened layer depth of the hardened layer 19 is set to be in a range of 2 to 4.5 mm. Thus, the annular groove 22 is arranged so that the shortest distance L between the annular groove 22 where the seal ring 23 is mounted and the outer raceway surface 4a is 4.5 mm or more. Accordingly, the annular groove 22 is not subject to thermal influence due to the quenching and its heat-treatment deformation can be prevented, and simultaneously decrease in the strength due to annealing or the like can be prevented and then the reliability can be improved.

Further, a corner R (R3) of the outboard side that is the near side of the outer raceway surface 4a of the corners R of the annular groove 22 is set to be larger (R3>R4) than a corner R (R4) of the inboard side. Accordingly, since the distance from the outer raceway surface 4a is substantially larger than that of the same corner R (R3=R4), it is advantageous against the heat-treatment deformation.

An outer member 24 of Fig. 5(b) is a modification example of the outer member 20 of Fig. 5(a). An annular groove 25, in which the seal ring 23 is mounted, is formed at the tapered portion 21b of the pilot portion 21. The annular groove 25 having a substantially semi-circular cross-section is configured such that the shape of the groove bottom portion is formed with a single radius of curvature R0. Accordingly, the annular groove 25 is subject to nearly no thermal influence to the quenching and decrease in the strength due to cut-out effect can be suppressed.

The present invention has been described with reference to the preferred embodiments. Obviously, the present invention is not limited to the preferred embodiments described above, and modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Industrial Applicability

The wheel bearing apparatus of the present invention can be applied to the wheel bearing apparatus of the semi-floating type in which the wheel bearing is mounted at the opening of the axle housing and the driving shaft, and the wheel of the vehicle is rotatably supported.

### Reference Signs List

- 1: wheel hub
- 1a: shoulder portion of wheel hub
- 2: double row rolling bearing
- 3: inner member
- 4, 20, 24: outer member
- 4a: outer raceway surface
- 4b: body mounting flange
- 5: rolling body
- 6: wheel mounting flange
- 7: cylindrical portion
- 8: serration
- 9: cap
- 9a: metal core
- 9b: elastic member
- 10: inner ring
- 10a: inner raceway surface
- 10b: large flange
- 10c: small flange
- 11: cage
- 12: seal
- 13: caulked portion
- 14: axle housing
- 15, 21: pilot portion of outer member
- 15a, 16a, 21a: cylindrical portion
- 15b, 16b, 21b: tapered portion
- 16: fitting portion of axle housing
- 17, 22, 25: annular groove
- 18, 23: seal ring
- 19: hardened layer of outer raceway surface
- 51: wheel hub
- 52: double row rolling bearing
- 53: inner member
- 54: outer member
- 54a: outer raceway surface
- 54b: body mounting flange
- 55: conical roller
- 56: wheel mounting flange
- 57: cylindrical portion
- 58: serration
- 59: caulked portion
- 60: inner ring
- 60a: inner raceway surface
- 61: cap
- 61a: metal core
- 61b: elastic member
- B: brake rotor
- B/C: brake cover
- D/S: driving shaft
- d1: bottom diameter of annular groove
- d2: inner diameter of seal ring
- d3: outer diameter of seal ring after mounting
- d4: inner diameter of cylindrical portion of axle housing
- H: axle housing
- R0: corner R of annular groove
- R1, R3: corner R of outboard side of seal ring
- R2, R4: corner R of inboard side of seal ring
- W: wheel

## Claims

1. A wheel bearing apparatus comprising:
an axle housing (14) into which a driving shaft (D/S) connecting to a differential gear is inserted and which is supported on the lower surface of a vehicle body;
a wheel hub (1) which is joined to the driving shaft (D/S) and integrally has a wheel mounting flange (6) for attaching a wheel (W) and in which a cylindrical portion (7) extending in an outer circumference in an axial direction is formed;
a wheel bearing (2) which is fitted between the cylindrical portion (7) of the wheel hub (1) and an opening of the axle housing (H) and rotatably supports the wheel (W);
an outer member (20) in which the wheel bearing (2) integrally has a body mounting flange (4b) to be attached to the axle housing (14) in the outer circumference and a pilot portion (21) fitted into the axle housing (14) at an end portion of an inner side, and double row outer raceway surfaces (4a, 4a) are integrally formed in the inner circumference;
an inner member (3) which is press-fitted in the cylindrical portion (7) of the wheel hub (1) and configured of at least one inner ring (10, 10) in which inner raceway surfaces (10a, 10a) are formed opposite to the double row outer raceway surfaces (4a, 4a);
double row rolling bodies (5, 5) which are rollably accommodated between the inner member (3) and both raceway surfaces (4a) of the outer member (20) via a cage (11); and
a seal (12,12) which is mounted in an opening of an annular space formed between the outer member (20) and the inner member (3), and
wherein an annular groove (22) is formed at the pilot portion (21) of the outer member (20), a seal ring (23) formed of a synthetic rubber is mounted in the annular groove (22) and elastically contacts the axle housing (14) and then a slight gap of a fitting portion (16) between the outer member (20) and the axle housing (14) is blocked off,
**characterized in that** the pilot portion (21) of the outer member (20) is configured of a cylindrical portion (21a) extending from the body mounting flange (4b) in the axial direction and a tapered portion (21b) gradually decreasing in its diameter from the cylindrical portion (21a) to the end surface of the inner side, that the fitting portion (16) of the axle housing (14) is formed corresponding to the shape of the pilot portion (21) of the outer member (20), that the annular groove (22) is formed at the tapered portion (21b) of the pilot portion (21) and that an inner diameter (d2) of the seal ring (23) unit is set to be smaller than a groove bottom diameter (d1)of the annular groove (22).

2. The wheel bearing apparatus according to claim 1,
wherein an outer diameter (d3) of the seal ring (23) after mounting is set to be smaller than the inner diameter (d4) of the cylindrical portion (16a) of the axle housing (14).

3. The wheel bearing apparatus according to claim 1,
wherein a predetermined hardened layer is formed by a high frequency induction quenching at the double row outer raceway surfaces of the outer member, an effective hardened layer depth of the hardened layer is set to be in a range of 2 to 4.5 mm, and the shortest distance between the annular groove and the outer raceway surface is set to be 4.5 mm or more.

4. The wheel bearing apparatus according to any one of claims 1 to 3,
wherein the annular groove (22) is formed with a substantially rectangular cross-section and a corner R (R3) in a near side of the outer raceway surface (4a) in corners R of the annular groove (22) is set to be larger than a corner R (R4) in a far side thereof.

5. The wheel bearing apparatus according to any one of claims 1 to 3,
wherein the annular groove (25) is formed in substantially semi-circular cross-section and the groove bottom portion has a single radius of curvature (R0).

6. The wheel bearing apparatus according to claim 1,
wherein a compression set in the rubber material values of the seal ring is 40 % or less in 120°C x 70 hours and TR10 value (elongation rate 50 %) is -20°C or less.

7. The wheel bearing apparatus according to claim 1,
wherein color of the seal ring is set as a warm color.

8. The wheel bearing apparatus according to claim 1,
wherein the same grease as enclosed inside the bearing is coated on the seal ring beforehand and the seal ring is mounted in a state where the grease is attached to its surface.

9. The wheel bearing apparatus according to claim 1,
wherein the seal ring is selected from hydrogenation acrylonitrile-butadiene rubber, ethylene propylene rubber, polyacrylic rubber, fluorine rubber or silicon rubber.

## Patentansprüche

1. Radlagervorrichtung, umfassend:
ein Achsgehäuse (14), in das eine mit einem Differentialgetriebe verbundene Antriebswelle (D/S) eingesetzt ist, und das an einer unteren Fläche eines Fahrzeugaufbaus gehalten wird;
eine Radnabe (1), die mit der Antriebswelle (D/S) verbunden ist und einstückig mit einem Radanbringungsflansch (6) zur Anbringung eines Rads (W) ausgeführt ist, und worauf ein zylinderförmiger Abschnitt (7), der sich in dem Außenumfang in einer Achsenrichtung erstreckt, gebildet ist;
ein Radlager (2), das zwischen den zylinderförmigen Abschnitt (7) der Radnabe (1) und eine Öffnung des Achsgehäuses (H) eingesetzt ist und das Rad (W) drehbar hält;
ein äußeres Element (20), worauf das Radlager (2) einstückig an dem Außenumfang mit einem Aufbauanbringungsflansch (4b) zur Anbringung an dem Achsgehäuse (14) und an einem Endabschnitt einer Innenseite mit einem Pilotabschnitt (21), der in das Achsgehäuse (14) eingesetzt wird, ausgeführt ist, und wobei an dem Innenumfang zwei Reihen von äußeren Laufringflächen (4a, 4a) gebildet sind;
ein inneres Element (3), das auf den zylinderförmigen Abschnitt (7) der Radnabe (1) pressgepasst ist und aus wenigstens einem inneren Ring (10, 10) gebildet ist, auf dem innere Laufringflächen (10a, 10a) den beiden Reihen von äußeren Laufringflächen (4a, 4a) gegenüberliegend gebildet sind;
zwei Reihen von Wälzkörpern (5, 5), die über einen Käfig (11) wälzfähig zwischen dem inneren Element (3) und beiden Laufringflächen (4a) des äußeren Elements (20) untergebracht sind; und
eine Dichtung (12, 12), die in einer Öffnung eines ringförmigen Raums, der zwischen dem äußeren Element (20) und dem inneren Element (3) gebildet ist, angebracht ist, und
wobei an dem Pilotabschnitt (21) des äußeren Elements (20) eine ringförmige Nut (22) gebildet ist, ein Dichtungsring (23), der aus einem Synthesekautschuk gebildet ist, in der ringförmigen Nut (22) angebracht ist und elastisch mit dem Achsgehäuse (14) in Kontakt steht, und somit ein winziger Zwischenraum eines Passbereichs (16) zwischen dem äußeren Element (20) und dem Achsgehäuse (14) blockiert wird,
**dadurch gekennzeichnet, dass** der Pilotabschnitt (21) des äußeren Elements (20) aus einem zylinderförmigen Abschnitt (21a), der sich von dem Aufbauanbringungsflansch (4b) in der Achsenrichtung erstreckt, und einem konischen Abschnitt (21b), dessen Durchmesser von dem zylinderförmigen Abschnitt (21a) zu der Endfläche der Innenseite allmählich abnimmt, gebildet ist, dass der Passbereich (16) des Achsgehäuses (14) so gebildet ist, dass er der Form des Pilotabschnitts (21) des äußeren Elements (20) entspricht, dass die ringförmige Nut (22) an dem konischen Abschnitt (21b) des Pilotabschnitts (21) gebildet ist, und dass ein Innendurchmesser (d2) der Dichtungsringeinheit (23) kleiner als ein Nutbodendurchmesser (d1) der ringförmigen Nut (22) festgelegt ist.

2. Radlagervorrichtung nach Anspruch 1,
wobei ein Außendurchmesser (d3) des Dichtungsrings (23) nach der Anbringung so festgelegt ist, dass er kleiner als der Innendurchmesser (d4) des zylinderförmigen Abschnitts (16a) des Achsgehäuses (14) ist.

3. Radlagervorrichtung nach Anspruch 1,
wobei eine vorherbestimmte gehärtete Schicht durch Hochfrequenz-Induktionsabschrecken an den beiden Reihen von äußeren Laufringflächen des äußeren Elements gebildet ist, wobei eine effektive Härtungsschichttiefe der gehärteten Schicht auf einen Bereich von 2 bis 4,5 mm festgelegt ist, und der kürzeste Abstand zwischen der ringförmigen Nut und der äußeren Laufringfläche auf 4,5 mm oder mehr festgelegt ist.

4. Radlagervorrichtung nach einem der Ansprüche 1 bis 3,
wobei die ringförmige Nut (22) mit einem im Wesentlichen rechteckigen Querschnitt ausgeführt ist und eine Ecke R (R3) an einer nahe an der äußeren Laufringfläche (4a) befindlichen Seite unter den Ecken R der ringförmigen Nut (22) größer als eine Ecke R (R4) an einer davon entfernt befindlichen Seite festgelegt ist.

5. Radlagervorrichtung nach einem der Ansprüche 1 bis 3,
wobei die ringförmige Nut (25) mit einem im Wesentlichen halbkreisförmigen Querschnitt ausgeführt ist und der Nutbodenabschnitt einen einzelnen Krümmungsradius (R0) aufweist.

6. Radlagervorrichtung nach Anspruch 1,
wobei ein Druckverformungsrest in den Kautschukmaterialwerten des Dichtungsrings 40 % oder weniger beträgt bei 120 °C x 70 Stunden und der TR10-Wert (Dehnrate 50 %) -20 °C oder weniger beträgt.

7. Radlagervorrichtung nach Anspruch 1,
wobei die Farbe des Dichtungsrings als warme Farbe festgelegt ist.

8. Radlagervorrichtung nach Anspruch 1,
wobei das gleiche Fett wie das im Inneren des Lagers eingeschlossene vorab auf den Dichtungsring aufgetragen ist und der Dichtungsring in einem Zustand, in dem das Fett an seiner Oberfläche anhaftet, angebracht ist.

9. Radlagervorrichtung nach Anspruch 1,
wobei der Dichtungsring aus hydriertem Acrylnitril-Butadien-Kautschuk, Ethylen-Propylen-Kautschuk, Polyacryl-Kautschuk, Fluorkautschuk oder Silikonkautschuk gewählt ist.

## Revendications

1. Appareil de roulement de roue comprenant :
un carter d'essieu (14) dans lequel est inséré un arbre d'entraînement (D/S) reliant à un engrenage différentiel et qui est supporté sur la surface inférieure d'une carrosserie de véhicule;
un moyeu de roue (1) qui est joint à l'arbre d'entraînement (D/S) et a, de façon solidaire, une bride de fixation de roue (6) pour fixer une roue (W), et moyeu de roue dans lequel est formée une portion cylindrique (7) s'étendant dans une circonférence extérieure suivant une direction axiale ;
un roulement de roue (2) qui est monté entre la portion cylindrique (7) du moyeu de roue (1), et une ouverture du carter d'essieu (H), et qui supporte en rotation la roue (W) ;
un élément extérieur (20) dans lequel le roulement de roue (2) a, de façon solidaire, une bride de fixation formant boîtier (4b) devant être fixée sur le carter d'essieu (14) dans la circonférence extérieure, et qui a une portion pilote (21) montée dans le carter d'essieu (14) au niveau d'une portion d'extrémité d'un côté intérieur, et des surfaces de chemin de roulement extérieur à deux rangées (4a, 4a) sont formées de façon solidaire dans la circonférence intérieure ;
un élément intérieur (3) qui est monté en force dans la portion cylindrique (7) du moyeu de roue (1) et configuré en se composant au moins d'une bague intérieure (10,10) dans laquelle sont formées des surfaces de chemin de roulement intérieur (10a, 10a) opposées aux surfaces de chemin de roulement extérieur à deux rangées (4a, 4a) ;
des corps de roulement à deux rangées (5, 5) qui sont logés de façon à rouler entre l'élément intérieur (3) et les deux surfaces de roulement (4a) de l'élément extérieur (20) via une cage (11) ; et
un joint d'étanchéité (12, 12) qui est monté dans une ouverture d'un espace annulaire formé entre l'élément extérieur (20) et l'élément intérieur (3), et
où une gorge annulaire (22) est formée au niveau de la portion pilote (21) de l'élément extérieur (20), une bague d'étanchéité (23) formée en se composant d'un caoutchouc synthétique est montée dans la gorge annulaire (22) et est au contact, de façon élastique, du carter d'essieu (14), et un faible intervalle d'une portion d'ajustement (16) compris entre l'élément extérieur (20) et le carter d'essieu (14) est alors bouché,
**caractérisé en ce que** la portion pilote (21) de l'élément extérieur (20) est configurée en se composant d'une portion cylindrique (21a) s'étendant, dans la direction axiale, à partir de la bride de fixation formant boîtier (4b), et en se composant d'une portion conique (21b) diminuant graduellement dans son diamètre, depuis la portion cylindrique (21a) jusqu'à la surface d'extrémité du côté intérieur, **en ce que** la portion d'ajustement (16) du carter d'essieu (14) est formée en correspondant à la forme de la portion pilote (21) de l'élément extérieur (20), **en ce que** la gorge annulaire (22) est formée au niveau de la portion conique (21b) de la portion pilote (21), et **en ce qu'**un diamètre intérieur (d2) de l'ensemble formant la bague d'étanchéité (23) est réglé pour être plus petit qu'un diamètre de fond de gorge (d1) de la gorge annulaire (22).

2. Appareil de roulement de roue selon la revendication 1,
dans lequel un diamètre extérieur (d3) de la bague d'étanchéité (23) est réglé, après montage, pour être plus petit que le diamètre intérieur (d4) de la portion cylindrique (16a) du carter d'essieu (14).

3. Appareil de roulement de roue selon la revendication 1,
dans lequel une couche durcie prédéterminée est formée par une trempe par induction à haute fréquence se produisant au niveau des surfaces de chemin de roulement extérieur à deux rangées de l'élément extérieur, une profondeur utile de la couche durcie est réglée pour se situer dans une plage comprise entre 2 mm et 4,5 mm, et la distance la plus courte comprise entre la gorge annulaire et la surface de chemin de roulement extérieur est réglée pour être égale ou supérieure à 4,5 mm.

4. Appareil de roulement de roue selon l'une quelconque des revendications 1 à 3,
dans lequel la gorge annulaire (22) est formée en ayant une section pratiquement rectangulaire, et une partie angulaire R (R3) située dans un côté proche de la surface de chemin de roulement extérieur (4a) se trouvant dans des parties angulaires R de la gorge annulaire (22) est réglée pour être plus grande qu'une partie angulaire R (R4) située dans un côté éloigné de ladite surface de chemin de roulement extérieur.

5. Appareil de roulement de roue selon l'une quelconque des revendications 1 à 3,
dans lequel la gorge annulaire (25) est formée en ayant une section pratiquement semi-circulaire, et la portion de fond de la gorge a un simple rayon de courbure (R0).

6. Appareil de roulement de roue selon la revendication 1,
dans lequel une compression concernant les valeurs du matériau en caoutchouc de la bague d'étanchéité est réglée en étant égale ou inférieure à 40 % dans 120°C x 70 heures, et une valeur TR10 (taux d'allongement 50 %) est égale ou inférieure à -20°C.

7. Appareil de roulement de roue selon la revendication 1,
dans lequel une couleur de la bague d'étanchéité est fixée comme étant une couleur chaude.

8. Appareil de roulement de roue selon la revendication 1,
dans lequel la même graisse, telle qu'elle est contenue à l'intérieur du roulement, est préalablement appliquée sur la bague d'étanchéité, et la bague d'étanchéité est montée dans un état où la graisse est fixée sur la surface de ladite bague d'étanchéité.

9. Appareil de roulement de roue selon la revendication 1,
dans lequel la bague d'étanchéité est sélectionnée parmi des caoutchoucs tels que du caoutchouc acrylonitrile-butadiène obtenu par hydrogénation, du caoutchouc éthylène propylène, du caoutchouc polyacrylique, du caoutchouc à base de fluor ou du caoutchouc à base de silicone.
